# EUROPÄISCHE PATENTSCHRIFT

(11) **EP 1 092 967 B1**
(45) Veröffentlichungstag und Bekanntmachung des Hinweises auf die Patenterteilung: **25.07.2007**
(21) Anmeldenummer: 00119671.6
(22) Anmeldetag: 08.09.2000
(51) Int. Cl.: G01L 5/28

(54) **Verfahren und Einrichtung zum Prüfen der Bremsanlage eines Fahrzeuges**
Procedure and device for testing the braking arrangement of a vehicle
Procédé et dispositif d'essai de l'installation de freinage d'un véhicule

(30) Priorität: 15.10.1999 DE 19949705
(43) Veröffentlichungstag der Anmeldung: 18.04.2001
(73) Patentinhaber: ROBERT BOSCH GMBH, 70442 Stuttgart (DE)
(72) Erfinder: Adolph, Dietrich, 73095 Albershausen (DE); Uffenkamp,Volker, 73434 Aalen (DE); Nobis, Guenter, 73240 Wendlingen (DE)
(74) Vertreter: Jeck, Anton

(56) Entgegenhaltungen:
- DE-A- 19 757 760
- US-A- 5 467 645

## Beschreibung

Die Erfindung bezieht sich auf ein Verfahren und eine Einrichtung zum Prüfen der Bremsanlage eines Fahrzeuges.

Ein Verfahren und eine Einrichtung zum Prüfen der Bremsanlage von Fahrzeugen ist in der US 5,467,645 angegeben. Bei diesem bekannten Verfahren bzw. dieser bekannten Einrichtung wird z.B. auf der Basis des Dopplereffekts mittels Radar die Geschwindigkeit und die Geschwindigkeitsänderungsrate bzw. Beschleunigung bzw. Verzögerung des Fahrzeuges gemessen, während mittels eines weiteren Sensors das Fahrzeuggewicht erfasst wird. Aus den verschiedenen Sensordaten wird mittels einer Auswerteeinrichtung der Zustand der Bremsanlage insbesondere bezüglich der verfügbaren Bremskraft beurteilt.

In der DE 197 57 760 A1 ist eine Vorrichtung zum Bestimmen der Rad- und/oder Achsgeometrie von Fahrzeugen offenbart, wobei mittels einer Bildaufnahmeeinrichtung mit zwei Bildaufnehmern aus verschiedenen Perspektiven Rad- und/oder Karosseriemerkmale während einer Vorbeifahrt erfasst und daraus die Rad- und/oder Achsgeometriedaten ermittelt werden. Diese Druckschrift macht keine Angaben zum Prüfen einer Bremsanlage.

Üblicherweise wird die Überprüfung der Bremsanlage eines Fahrzeuges auf einem Bremsenprüfstand mit angetriebenen Rollen und einer mit diesen zusammenwirkenden Messeinrichtung vorgenommen. Ein derartiger Bremsenprüfstand erlaubt die Messung der Bremskraft und auch der Gleichmäßigkeit der Bremswirkung bezüglich der Räder einer Achse. Hingegen sind Rückschlüsse auf die Reaktion des Fahrzeuges auf der Fahrbahn bei einem realen Bremsvorgang nicht unmittelbar herzuleiten. Auch ist die Installation eines derartigen Bremsenprüfstandes mit erheblichem Aufwand verbunden.

Der Erfindung liegt die Aufgabe zugrunde, ein Verfahren und eine Einrichtung zum Prüfen der Bremsanlage eines Fahrzeuges bereitzustellen, mit dem/der auch Aussagen über das Verhalten des Fahrzeuges bei einem realen Bremsvorgang auf der Fahrbahn möglich sind, wobei die Einrichtung relativ einfach installiert werden kann.

Diese Aufgabe wird bei dem Verfahren mit den Merkmalen des Anspruches 1 und bei der Einrichtung mit den Merkmalen des Anspruches 9 gelöst.

Durch die Erfassung der räumlichen Bewegung der Merkmale und Gewinnung ihrer Bewegungsdaten während des Bremsvorganges kann nicht nur die Bremsverzögerung, sondern auch die Reaktion des Fahrzeuges bei einem realen Bremsvorgang auf der Fahrbahn bestimmt werden. Dadurch werden genauere Aussagen zur Wirkung der Bremsen und z.B. deren Gleichmäßigkeit auf das Verhalten des Fahrzeuges möglich. Die Bewertung der Bremswirkung wird dabei dadurch verbessert, dass die optische Erfassung auf beiden Seiten des Fahrzeuges gleichzeitig erfolgt und die Bewegungsdaten beider Seiten ausgewertet werden.

Ist vorgesehen, dass auch vor dem Bremsvorgang die räumliche Bewegung der Merkmalsanordnung erfasst und eine Ausgangsgeschwindigkeit vor dem Bremsvorgang bestimmt wird, so lässt sich die Bremswirkung in Abhängigkeit von unterschiedlichen Ausgangsgeschwindigkeiten untersuchen.

Verschiedene Einflüsse im Zusammenhang mit der Bremsbewertung lassen sich dadurch ermitteln, dass zumindest ein auf der Karosserie vorhandenes oder angebrachtes Merkmal erfasst wird und daraus mindestens einer der Vorgänge Abbremsbeschleunigung, Gierbewegung des Fahrzeuges, Nickbewegung des Fahrzeuges, Fahrachse, Lenkeinschläge aus der Änderung der Fahrtrichtung bei unverzögerter Bewegung und Bremsweg zum Bewerten der Bremsanlage bestimmt wird/werden.

Entsprechende und weitere Einflüsse im Zusammenhang mit der Bremswirkung lassen sich dadurch ermitteln, dass zumindest ein an dem Rad vorhandenes oder angebrachtes Merkmal erfasst wird und daraus mindestens eine(r) der Eigenschaften oder Vorgänge Abbremsbeschleunigung, Gierbewegung des Fahrzeuges, Fahrachse aus der Beobachtung eines virtuellen Drehpunktes auf der Drehachse am Rad, Spur und Sturz vor und während des Abbremsens, Lenkeinschläge aus der Änderung der Fahrtrichtung bei unverzögerter Bewegung, Lenkeinschläge aus dem Vergleich der Spur der gelenkten Räder zur beobachteten Fahrtrichtung bei verzögerter und unverzögerter Bewegung, Drehwinkel eines Rades aus der Lageänderung eines Radmerkmals bezüglich des virtuellen Drehpunktes, Rollradius aus Drehwinkel und zurückgelegtem Fahrweg des virtuellen Drehpunktes bei unverzögerter Bewegung, Reifendruck aus dem ermittelten Rollradius, Schlupf zwischen Rad und Fahrbahn während des Abbremsens aus der aktuellen Geschwindigkeit und dem Rollradius, Funktion eines ABS-Bremssystems bis zum Blockieren des betreffenden Rades und Bremsweg zum Bewerten der Bremsanlage bestimmt wird/werden. Der virtuelle Drehpunkt bedeutet dabei, dass der beobachtete Drehpunkt nicht physikalisch vorhanden ist, sondern aus der Drehebene mindestens einer Radmarke ermittelt wird, z.B. durch rechnerische Ermittlung des Drehzentrums in der Drehebene des Radmerkmales.

Verbesserte Möglichkeiten zur Bewertung der Bremsanlage ergeben sich dadurch, dass zusätzlich eine Pedalkraft an einem Bremspedal erfasst wird und ein Zeitverzug zwischen Betätigung der Bremse und Einsetzen des Bremsvorganges ermittelt wird.

Ferner ist es mit dem Verfahren möglich, dass der Rollradius unter Erfassen mindestens eines Radmerkmales und Ermitteln der Lage der Fahrbahn bezüglich des Messsystems mit Hilfe zusätzlicher Merkmale auf der Fahrbahn oder einer Bezugsmerkmalsanordnung bestimmt wird.

Erweiterte und genauere Aussagen zur Bremswirkung können dadurch gemacht werden, dass sowohl mindestens ein Radmerkmal als auch ein Karosseriemerkmal erfasst werden und mindestens eine Eigenschaft oder ein Vorgang gemäß Anspruch 3 oder 4 bestimmt wird und/oder ein Achsspiel eines Rades entlang der Drehachse aus der Relativbewegung gegenüber der Karosserie bestimmt wird/werden.

Bei der Einrichtung sind verschiedene vorteilhafte Ausgestaltungen, mit denen sich vorstehend genannte Vorteile erzielen lassen, in dem Unteranspruch 10 angegeben.

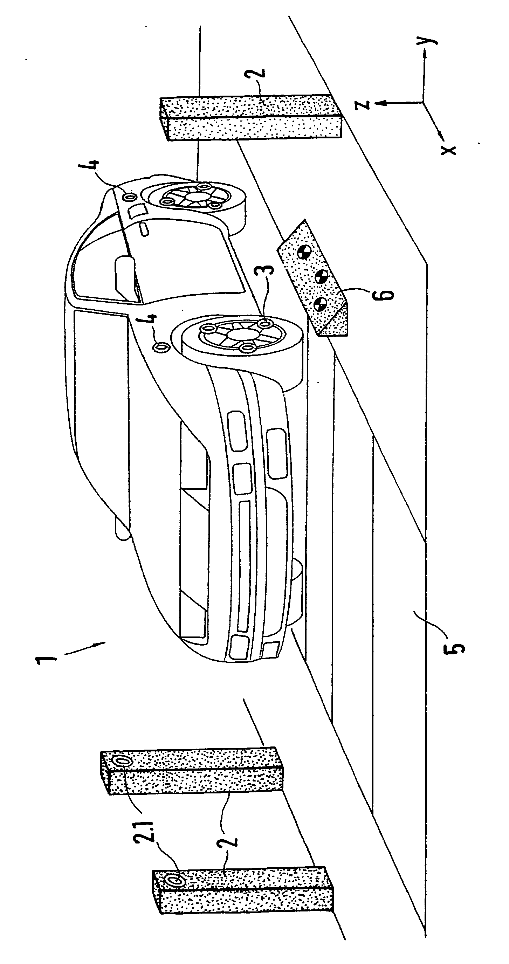

Die Erfindung wird nachfolgend anhand eines Ausführungsbeispiels unter Bezugnahme auf die Zeichnung erläutert.

Die Fig. zeigt einen Prüfplatz mit einem Prüfplatzboden 5 auf dem auf beiden Seiten eines Fahrbahnabschnittes Bildaufnahmevorrichtungen 2 mit Bildaufnehmern 2.1, insbesondere Kameras, angeordnet sind. Mit den Bildaufnehmern 2.1 werden während der Vorbeifahrt eines Kraftfahrzeuges an diesem angebrachte Merkmale in Form von Radmarken 3 und Karosseriemarken 4 z.B. gleichzeitig auf beiden Seiten des Kraftfahrzeuges aus mindestens zwei unterschiedlichen Perspektiven erfasst, wobei sich die Positionierung der Bildaufnehmer 2.1 auf dem Prüfplatz 1 beispielsweise auch mittels prüfplatzfester Bezugsmarken, wie in der DE 197 57 763 A1 und auch der DE 197 57 760 A1 angegeben, oder mit Hilfe eines pendelnd aufgehängten mobilen Bezugsmarkensystems feststellen lässt, wobei die Anordnung der Bezugsmarken der Auswerteeinrichtung bekannt oder unbekannt sind. Mit der Bezugsmerkmalsanordnung 6 ist es gleichzeitig auch vorteilhaft möglich, den absoluten Maßstab festzulegen, so dass damit absolute Messdaten errechnet werden können.

In einer an die Bildaufnahmevorrichtungen 2 angeschlossenen Auswerteeinrichtung werden die räumlichen Bewegungen der Karosseriemarken 4 und/oder Radmarken 3 ermittelt und aus den so erhaltenen Bewegungsdaten Aussagen zur Bremswirkung hergeleitet. Die Ermittlung der Eigenschaften oder Vorgänge erfolgt dabei mittels an sich bekannter Algorithmen, die auf den jeweiligen Fahrzeugtyp abgestimmt bzw. durch Erfahrungswerte angepasst sein können. Die Bremskräfte lassen sich z.B. errechnen, wenn das Fahrzeuggewicht bekannt ist.

Mit der angegebenen, auf dem Prüfplatz 1 angeordneten optischen Messvorrichtung werden Reaktionen der Räder und/oder der Karosserie des Fahrzeuges in Folge eines Bremsvorganges unmittelbar erkennbar. Aus den Reaktionen kann auf die Wirkung der Bremsen, z.B. die Bremsverzögerung, die Gleichmäßigkeit der Bremswirkung und weitere Messgrößen, wie sie einleitend genannt sind, rückgeschlossen werden. Beispielsweise deutet eine Gierbewegung des Fahrzeuges während des Abbremsens, die sich in einem Ausbrechen nach rechts oder links zeigt, oder eine ungleiche Nickbewegung zwischen linker und rechter Fahrzeugseite auf die Ungleichmäßigkeit oder einen ungleichen Einsatz der Bremswirkung hin. Zudem kann die Ausgangsgeschwindigkeit erfasst und die Bremswirkung in Abhängigkeit von dieser bestimmt werden.

Durch synchrone Erfassung der Bewegung der Radmerkmale 3 und/oder Karosseriemerkmale 4 auf beiden Seiten des Fahrzeuges und Verrechnung der Bewegungsdaten miteinander lassen sich die Messergebnisse verbessern.

Die Fahrachse lässt sich beispielsweise aus der Beobachtung eines virtuellen Drehpunktes auf der Drehachse eines Rades bestimmen, wobei virtuell bedeutet, dass der beobachtete Drehpunkt nicht physikalisch vorhanden ist, sondern aus der Drehebene mindestens eines Radmerkmals, zweckmäßigerweise aus mehreren einzelnen Radmerkmalen z.B. durch rechnerische Mittelung der Drehzentren der einzelnen Drehebenen der Marken auf der zugehörigen, gemeinsamen Drehachse.

Wird zusätzlich zu der optischen Messvorrichtung noch ein Pedalkraftgeber am Bremspedal angebracht, so lässt sich der Zeitverzug zwischen Betätigung der Bremse und Einsetzen des Bremsvorganges ermitteln.

## Patentansprüche

1. Verfahren zum Prüfen der Bremsanlage eines Fahrzeuges, wobei zumindest während eines Bremsvorganges synchron auf beiden Seiten des Fahrzeuges jeweils mindestens ein an zumindest einem Rad und mindestens ein an der Karosserie des Fahrzeugs angebrachtes oder vorhandenes Merkmal (3; 4) einer Merkmalsanordnung in ihrer räumlichen Bewegung relativ zum Prüfplatz mit einer jeweiligen Bildaufnahmevorrichtung (2) optisch erfasst und aus den Bewegungsdaten beider Seiten Eigenschaften der Bremse ermittelt werden, wobei die Merkmalsanordnung mit mindestens zwei Bildaufnehmern (2.1) der Bildaufnahmevorrichtungen (2) aus mindestens zwei verschiedenen Perspektiven beobachtet wird, Reaktionen der Räder und der Karosserie des Fahrzeugs erkannt und aus diesen Reaktionen auf die Wirkung der Bremsen rückgeschlossen wird und wobei aus einer sich in einem Ausbrechen des Fahrzeuges nach links oder rechts zeigenden Gierbewegung des Fahrzeugs während des Abbremsens oder aus einer ungleichen Nickbewegung zwischen linker und rechter Fahrzeugseite auf eine Ungleichmäßigkeit oder einen ungleichen Einsatz der Bremswirkung geschlossen wird.

2. Verfahren nach Anspruch 1,
**dadurch gekennzeichnet,**
**dass** auch vor dem Bremsvorgang die räumliche Bewegung der Merkmalsanordnung (3, 4) erfasst und eine Ausgangsgeschwindigkeit vor dem Bremsvorgang bestimmt wird.

3. Verfahren nach Anspruch 1 oder 2,
**dadurch gekennzeichnet,**
**dass** weiterhin aus der Erfassung mindestens eines auf der Karosserie vorhandenen oder angebrachten Merkmals (4) mindestens einer der Vorgänge Abbremsbeschleunigung, Lenkeinschläge aus der Änderung der Fahrtrichtung bei unverzögerter Bewegung und Bremsweg zum Bewerten der Bremsanlage bestimmt wird/werden.

4. Verfahren nach Anspruch 1 oder 2,
**dadurch gekennzeichnet,**
**dass** weiterhin aus der Erfassung mindestens eines an dem Rad vorhandenen oder angebrachten Merkmals (3) mindestens eine(r) der Eigenschaften oder Vorgänge Abbremsbeschleunigung, Fahrachse aus der Beobachtung eines virtuellen Drehpunktes auf der Drehachse am Rad, Spur und Sturz vor und während des Abbremsens, Lenkeinschläge aus der Änderung der Fahrtrichtung bei unverzögerter Bewegung, Lenkeinschläge aus dem Vergleich der Spur der gelenkten Räder zur beobachteten Fahrtrichtung bei verzögerter und unverzögerter Bewegung, Drehwinkel eines Rades aus der Lageänderung eines Radmerkmals bezüglich ihres virtuellen Drehpunktes, Rollradius aus Drehwinkel und zurückgelegtem Fahrweg des virtuellen Drehpunktes bei unverzögerter Bewegung, Reifendruck aus dem ermittelten Rollradius, Schlupf zwischen Rad und Fahrbahn während des Abbremsens aus
der aktuellen Geschwindigkeit und dem Rollradius, Funktion eines ABS-Bremssystems bis zum Blockieren des betreffenden Rades und Bremsweg zum Bewerten der Bremsanlage bestimmt wird/werden.

5. Verfahren nach einem der vorhergehenden Ansprüche,
**dadurch gekennzeichnet,**
**dass** zusätzlich eine Pedalkraft an einem Bremspedal erfasst wird und ein Zeitverzug zwischen Betätigung der Bremse und Einsetzen des Bremsvorganges ermittelt wird.

6. Verfahren nach einem der vorhergehenden Ansprüche,
**dadurch gekennzeichnet,**
**dass** der Rollradius unter Erfassen mindestens eines Radmerkmales und Ermitteln der Lage der Fahrbahn bezüglich des Messsystems mit Hilfe zusätzlicher Merkmale auf der Fahrbahn oder einer Bezugsmerkmalsanordnung bestimmt wird.

7. Verfahren nach einem der vorhergehenden Ansprüche,
**dadurch gekennzeichnet,**
**dass** sowohl mindestens ein Radmerkmal (3) als auch ein Karosseriemerkmal (4) erfasst werden und mindestens eine Eigenschaft oder ein Vorgang gemäß Anspruch 3 oder 4 bestimmt wird und/oder ein Achsspiel eines Rades entlang der Drehachse aus der Relativbewegung gegenüber der Karosserie bestimmt wird/werden.

8. Verfahren nach einem der vorhergehenden Ansprüche,
**dadurch gekennzeichnet,**
**dass** die Messdaten unter Einbeziehung einer Bezugsmerkmalsanordnung errechnet werden.

9. Einrichtung zum Prüfen der Bremsanlage eines Fahrzeuges, bei der eine optische Messvorrichtung mit einer bezüglich eines Prüfplatzes zumindest während der Messung ortsfesten Bildaufnahmevorrichtung (2), mit einer an der Karosserie und/oder an den Rädern angebrachten oder vorhandenen, mit der Bildaufnahmevorrichtung (2) erfassbaren Merkmalsanordnung und mit einer Auswerteeinrichtung zum Ermitteln der räumlichen Bewegung der Merkmalsanordnung und Bewerten der Bremsanlage auf der Grundlage der Bewegungsdaten vorgesehen ist, wobei die Bildaufnahmevorrichtung (2) zur Beobachtung der Merkmalsanordnung aus mindestens zwei verschiedenen Perspektiven mindestens zwei Bildaufnehmer (2.1) aufweist und wobei die Merkmalsanordnung mindestens ein Radmerkmal (3) und mindestens ein Karosseriemerkmal (4) aufweist und wobei die Bewegungsdaten aus der Bewegung des mindestens einen Radmerkmals (3) und des mindestens einen Karosseriemerkmals (4) bestehen, wobei die Merkmalsanordnung Radmerkmale (3) und Karosseriemerkmale (4) auf beiden Fahrzeugseiten aufweist und zur synchronen Erfassung der Bewegungsdaten auf beiden Fahrzeugseiten eine Bildaufnahmevorrichtung (2) auf jeder Seite des Fahrzeuges angeordnet ist und wobei die Einrichtung weiterhin in der Weise ausgebildet ist, dass Reaktionen der Räder und der Karosserie des Fahrzeugs erkannt und aus diesen Reaktionen auf die Wirkung der Bremsen rückgeschlossen wird und dass aus einer sich in einem Ausbrechen des Fahrzeuges nach links oder rechts zeigenden Gierbewegung des Fahrzeugs während des Abbremsens oder aus einer ungleichen Nickbewegung zwischen linker und rechter Fahrzeugseite auf eine Ungleichmäßigkeit oder einen ungleichen Einsatz der Bremswirkung geschlossen wird.

10. Einrichtung nach Anspruch 9,
**dadurch gekennzeichnet,**
**dass** eine Bezugsmerkmalsanordnung vorgesehen ist.

## Claims

1. Method for testing the brake system of a vehicle, wherein in each case at least one feature (3; 4) which is provided or present on at least wheel and at least one feature (3; 4) which is provided or present on the bodywork of the vehicle, of a feature arrangement, is sensed optically in its spatial movement relative to the test station, synchronously on both sides of the vehicle at least during a braking process, with a respective image recording device (2) and properties of the brake are determined from the movement data of both sides, wherein the feature arrangement is observed from at least two different perspectives using at least two image recorders (2.1) of the image recording devices (2), reactions of the wheels and of the bodywork of the vehicle being detected and the effect of the brakes being concluded from these reactions, and wherein an inequality or an unequal application of the braking effect is inferred from a yawing movement of the vehicle which is expressed as swerving of the vehicle to the left or right during braking, or from an unequal pitching movement between the left and right hand sides of the vehicle.

2. Method according to Claim 1, **characterized in that** the spatial movement of the feature arrangement (3, 4) is also sensed before the braking process, and an initial speed before the braking process is determined.

3. Method according to Claim 1 or 2, **characterized in that**, in addition, on the basis of the sensing of at least one feature (4) which is present or provided on the vehicle bodywork, at least one of the processes of braking acceleration, steering lock angles is/are determined from the change in the direction of travel given non-decelerated movement and a braking distance in order to evaluate the brake system.

4. Method according to Claim 1 or 2, **characterized in that**, in addition, on the basis of the sensing of at least one feature (3) which is present or provided on the wheel, at least one of the following properties or processes is/are determined: braking acceleration, travel axis from the observation of a virtual centre of rotation on the rotational axis on the wheel, toe-in and camber before and during braking, steering lock angles from the change in the direction of travel given non-decelerated movement, steering lock angles showing the comparison of the toe-in of the steered wheels with the observed direction of travel given decelerated and non-decelerated movement, and the angle of rotation of a wheel from the change in position of a wheel feature with respect to its virtual centre of rotation, rolling radius from the rotational angle and distance travelled by the virtual centre of rotation given non-decelerated movement, tyre pressure from the rolling radius which is determined, slip between the wheel and carriageway during braking from the current speed and the rolling radius, function of an ABS brake system until the respective wheel locks, and braking distance in order to evaluate the brake system.

5. Method according to one of the preceding claims, **characterized in that** a pedal force is additionally sensed at a brake pedal and a delay between activation of the brake and commencement of the braking process is determined.

6. Method according to one of the preceding claims, **characterized in that** the rolling radius is determined by sensing at least one wheel feature and determining the position of the carriageway with respect to the measurement system using additional features on the carriageway or a reference feature arrangement.

7. Method according to one of the preceding claims, **characterized in that** both at least one wheel feature (3) and a vehicle bodywork feature (4) are sensed, and at least one property or one process is determined according to Claim 3 or 4 and/or one axle play of a wheel along the rotational axis is determined from the relative movement with respect to the vehicle body.

8. Vehicle according to one of the preceding claims, **characterized in that** the measurement data is calculated with the inclusion of a reference feature arrangement.

9. Device for testing the brake system of a vehicle, in which an optical measuring device having an image-recording device (2) which is fixed with respect to a test station at least during the measurement, having a feature arrangement which is provided or present on the vehicle bodywork and/or on the wheels and can be sensed with the image-recording device (2), and having an evaluation device for determining the spatial movement of the feature arrangement and evaluating the brake system on the basis of the movement data is provided, wherein the image-recording device (2) has at least two image recorders (2.1) for observing the feature arrangement from at least two different perspectives, and wherein the feature arrangement has at least one wheel feature (3) and at least one vehicle bodywork feature (4), and wherein the movement data is composed of the movement of the at least one wheel feature (3) and of the movement of the at least one vehicle bodywork feature (4), wherein the feature arrangement has wheel features (3) and vehicle bodywork features (4) on both sides of the vehicle, and an image-recording device (2) is arranged on each side of the vehicle in order to synchronously sense the movement data on both sides of the vehicle, and wherein the device is in addition embodied in such a way that reactions of the wheels and the vehicle bodywork of the vehicle are detected and the effects of the brakes are inferred from these reactions, and that an inequality or an unequal application of the braking effect is inferred from a yawing movement of the vehicle which is expressed in swerving of the vehicle to the left or right during braking, or from an unequal pitching movement between the left and right hand sides of the vehicle.

10. Device according to Claim 9, **characterized in that** a reference feature arrangement is provided.

## Revendications

1. Procédé de contrôle de l'installation de freinage d'un véhicule automobile, selon lequel, pendant une opération de freinage, des deux côtés du véhicule au moins un élément caractéristique sur au moins une roue et au moins un élément caractéristique placé ou existant sur la carrosserie (3 ; 4), et appartenant à un système de caractéristiques, ont leurs mouvements par rapport à la station de contrôle saisis optiquement au moyen d'un dispositif de prise de vue (2) et, à partir des données de mouvement des deux côtés, on détermine les qualités des freins, le système de caractéristiques est observé à l'aide d'au moins deux appareils (2.1) des dispositifs de prise de vue (2) prenant au moins deux vues en perspective différentes, on détecte les réactions des roues et de la carrosserie du véhicule, et de ces réactions on déduit l'efficacité des freins, et si pendant le freinage un mouvement de lacet se manifeste par une embardée du véhicule vers la gauche ou la droite, ou si on constate un mouvement de tangage irrégulier entre la gauche et la droite, on en déduit une irrégularité ou une utilisation irrégulière de l'effet de freinage.

2. Procédé selon la revendication 1,
**caractérisé en ce qu'**
on saisit même l'opération de freinage, le déplacement dans l'espace du système de caractéristiques (3, 4) et on détermine une vitesse initiale avant l'opération de freinage.

3. Procédé selon la revendication 1 ou 2,
**caractérisé en ce qu'**
à partir de la saisie d'au moins un élément caractéristique (4) existant ou placé sur la carrosserie, pour évaluer l'installation de freinage on détermine au moins une des opérations que sont l'accélération du freinage, les braquages de la direction résultant de la variation de la direction de circulation en mouvement non ralenti et la longueur du freinage, est déterminée.

4. Procédé selon une des revendications 1 et 2,
**caractérisé en ce que**
de plus, pour évaluer l'installation de freinage, on détermine à partir de la saisie d'au moins un élément caractéristique (3) existant ou placé sur la roue, au moins une des qualités ou une des opérations suivantes, à savoir l'accélération de freinage de l'essieu par l'observation d'un point de rotation virtuel sur l'axe de rotation de la roue, la trace et la plongée avant et pendant le freinage, des braquages de la direction à partir de la variation de la direction de déplacement en mouvement non ralenti, des braquages de la direction en comparant la trace des roues directrices à la direction de déplacement observée en déplacement ralenti et non ralenti, l'angle de rotation d'une roue à partir de la variation de la position d'un élément caractéristique sur la roue par rapport à son point de rotation virtuel, le rayon de roulement à partir de l'angle de rotation et du parcours effectué par le point virtuel en déplacement non ralenti, la pression de pneumatique à partir du rayon de roulement déterminé, le patinage entre la roue et la voie de circulation pendant le freinage à partir de la vitesse actuelle du véhicule et du rayon de roulement, le fonctionnement d'un système de freinage ABS jusqu'au blocage de la roue concernée, ainsi que le parcours de freinage.

5. Procédé selon une des revendications précédentes,
**caractérisé en ce que**
de plus, on saisit la force exercée sur la pédale de frein et on détermine le décalage dans le temps entre l'actionnement des freins et l'engagement de l'opération de freinage.

6. Procédé selon une des revendications précédentes,
**caractérisé en ce que**
le rayon de roulement est déterminé en saisissant au moins un élément caractéristique de roue et en établissant la position de la voie de circulation par rapport au système de mesure à l'aide d'autres éléments caractéristiques sur la voie de circulation ou sur un système de caractéristiques de référence.

7. Procédé selon une des revendications précédentes,
**caractérisé en ce qu'**
on saisit au moins un élément caractéristique de roue (3) et un élément caractéristique de carrosserie (4), et on détermine au moins une qualité ou une opération selon la revendication 3 ou 4 et/ou un jeu axial d'une roue sur son axe de rotation à partir de son déplacement par rapport à la carrosserie.

8. Procédé selon une des revendications précédentes,
**caractérisé en ce que**
les données de mesure sont calculées en fonction d'un système de caractéristiques de référence.

9. Dispositif de contrôle de l'installation de freinage d'un véhicule automobile, comportant un dispositif optique de mesure avec un dispositif de prise de vue (2) fixe par rapport à la station de contrôle au moins pendant les opérations de mesure, un système de caractéristiques avec un élément caractéristique existant ou placé sur la carrosserie et/ou sur les roues et que peut saisir le dispositif de prise de vue (2), un dispositif d'évaluation pour déterminer le mouvement spatial du système de caractéristiques et évaluer l'installation de freinage en se basant sur les données de mouvement, étant précisé que le dispositif de prise de vue (2), pour observer le système de caractéristiques, dispose d'au moins deux vues en perspective prises par au moins deux appareils de prise de vue (2.1), le système de caractéristiques présente au moins un élément caractéristique de roue (3) et au moins un élément caractéristique de carrosserie (4), les données de mouvement étant celles des mouvements d'au moins un élément caractéristique de roue (3) et d'au moins un élément caractéristique de carrosserie (4), le système de caractéristiques comprend des éléments caractéristiques de roue (3) et des éléments caractéristiques de carrosserie (4) des deux côtés du véhicule, en saisissant les données de mouvement, en synchronisme chaque côté du véhicule par un dispositif de prise de vue (2) prévu de chaque côté,
**caractérisé en ce que**
le dispositif de contrôle saisit les réactions des roues et de la carrosserie du véhicule et en déduit l'effet des freins et, dans le cas d'un mouvement de lacet du véhicule se traduisant par une embardée vers la gauche ou vers la droite, ou d'un mouvement de tangage irrégulier entre les côtés gauche et droit du véhicule, en déduit la présence d'une irrégularité ou d'une utilisation irrégulière de l'action de freinage.

10. Dispositif selon la revendication 9,
**caractérisé par**
un système de caractéristiques de référence.
